# EUROPEAN PATENT SPECIFICATION

(11) **EP 2 159 141 B1**
(45) Date of publication and mention of the grant of the patent: **18.08.2010**
(21) Application number: 08015275.4
(22) Date of filing: 29.08.2008
(51) Int. Cl.: B62J 17/02, B62K 11/04, B62J 23/00

(54) **A cover assembly for a motorcycle and a motorcycle equipped with such a cover assembly**
Abdeckungsanordnung für ein Motorrad und mit einer solchen Abdeckungsanordnung ausgestattetes Motorrad
Ensemble de couvercle pour motocyclette et motocyclette équipée d'un tel ensemble de couvercle

(43) Date of publication of application: 03.03.2010
(73) Proprietor: Yamaha Motor Research & Development Europe s.r.l., 20050 Gerno di Lesmo (MI) (IT)
(72) Inventor: Ohta, Hiroshi, 1082NR Amsterdam (NL); Sasanami, Kazumasa, Asahi-shi Ciba 289-2616 (JP)
(74) Representative: Grünecker, Kinkeldey, Stockmair & Schwanhäusser Anwaltssozietät

(56) References cited:
- US-A1- 2006 012 207
- US-A1- 2006 254 844

## Description

The present invention relates to the field of motorcycles. In particular, the present invention relates to accessories for motorcycles. In more detail, the present invention relates to the design and layout of accessories of motorcycles as well as to the location, disposition, shape and dimension of said accessories. Still in more detail, the present invention also relates to the layout and design of a cover assembly and/or a cover arrangement adapted to be mounted on a motorcycle so as to protect component parts of said motorcycle, conferring at the same time a predefined appearance and look to the motorcycle, along with a good driving feeling for the driver and/or passenger of said motorcycle. Finally, the present invention shall allow to confer motorcycles an improved aerodynamics.

It is the well known that accessories of motorcycles such as, for instance, the covering and/or protecting elements usually fixed to the fuel tank so as to protect both said fuel tank and component parts of the motorcycle located therebeneath, influence not only the overall look and appearance of the motorcycle, but also its performance. In fact, in the particular case of the covering and/or protecting elements cited above, said elements influence the overall aerodynamics of the motorcycle on which they are mounted and influence therefore the speed and in tum the fuel consumption of said motorcycles. Moreover, big or cumbersome covering elements may become too bulky, resulting in an increased overall weight of the motorcycle with said overall weight influencing again the overall performance (speed or the like) as well as the fuel consumption. Furthermore, since covering elements are usually applied to the fuel tank i.e. in proximity of the main seat (in front of it in the travelling direction) said covering elements actually define the position of the legs of the driver during travelling; an annoying or uncomfortable position of the legs of the driver may result in a poor driving feeling for the driver. Moreover, since covering elements are usually provided for the purpose of protecting component parts (usually those component parts located beneath the fuel tank, such as, for instance, the cylinder head), said covering elements need to be removed as soon as maintenance and/or repair of said component parts is requested. Accordingly, if removing said covering elements becomes a troublesome operation, then the corresponding time involved may unduly increase, thus resulting in increased maintenance costs. The same considerations as stated above also apply to the assembly operations; it is in fact a usual goal of the manufacturers of motorcycles to simplify the assembly operations of the covering elements as much as possible so as to reduce as much as possible the working time and the costs related to said assembly operations.

It should also not be forgotten that, in the case of accidents and/or impacts or cracks, the covering elements may usually not be repaired and need to be substituted, accordingly; however, substituting expensive covering elements means increased repair costs so that the manufacturers of motorcycles usually refrain from designing expensive covering elements.

It results therefore from the above that many goals have to be taken into consideration during the design of covering elements for motorcycles; said goals may be summarized as follows.

On the one hand, covering elements must offer good resistance to impacts, shocks, blows or the like but, on the other hand, may not become too bulky or cumbersome. In spite of their dimensions (preferably contained) covering and/or protecting elements have to adequately protect component parts of the motorcycle (the fuel tank, the cylinder, the engine or the like); even their shape has to be designed taking these requirements into account. Covering elements should confer good appearance and improved aerodynamics to the motorcycles or at least not negatively affect either the appearance or the aerodynamics of the motorcycle. Covering elements may neither negatively influence the driving feeling of the driver. In particular, covering elements should allow the driver of the motorcycle to which they are applied to find a convenient position for his legs during travelling or driving. Assembling and removing covering elements to and from a motorcycle, respectively (for instance during assembly of the motorcycle or when maintenance operations are needed) should be as easy and quick as possible in order to adequately contain assembly and maintenance or repair costs. Covering elements may not become too expensive. Moreover, besides simplified assembly and removal operations, covering elements have to be fixed to or mounted on a motorcycle in a reliable way; that means that covering elements may not become accidently detached or disjointed from the motorcycle. Finally, covering elements should be adapted to be mounted on different motorcycles, namely on motorcycles with different layout and design

Accordingly, in an attempt to meet as many as possible of the goals outlined above, several solutions have been suggested in recent years by the manufacturers of motorcycles, with these solutions relating in particular to the layout and design of covering elements of motorcycles, as well as to the way said covering elements may be applied to and removed from said motorcycles. For instance solutions have been proposed in the past according to which a unique covering element is provided, with said unique covering element, once applied to the motorcycle, covering the fuel tank almost entirely and comprising extending portions extending downwardly on opposite sides of the motorcycle. However, even if this solution may allow to speed up the assembly operations, this solution was rejected since substituting said unique covering element in the case of damages became too expensive. According to other solutions known in the art, two covering elements were suggested, adapted to be mounted on the left and right side of the motorcycle, respectively. In this case however, the assembly and maintenance operation became too expensive due to the increased number of fixing means needed (such as, for instance, screws, bolts or the like). It was also suggested to provide small side cover elements adapted to cover and protect essentially the fuel tank of the motorcycle; however, even if on the one hand, this solution was appreciated in some cases by the customer (due to the funny look of the motorcycle), also this solution was revealed to be inconvenient due to the reduced protection offered by said small covering to the component parts of the motorcycle located beneath the fuel tank. According to still other solutions proposed in the past, it was suggested to leave the fuel tank unprotected and to pay great attention to the protection of component parts located beneath the fuel tank; drawbacks however arose since it became difficult to adequately protect the fuel tank and to confer a pleasant look to the motorcycle. It was revealed in particular to be very difficult to meet the requirements of conferring good aerodynamics to the motorcycle whilst offering to the driver a good and convenient position for his legs, thus allowing him to enjoy a good driving feeling.

An example of a shroud of a motorcycle can be found in US 2006/254844 A1.

Accordingly, in view of the above, it is an object of the present invention to overcome the usual problems affecting the prior art solutions relating to cover assemblies and/or elements and/or arrangements for motorcycles and to meet as many as possible of the goals outlined above. In particular, it is an object of the present invention to provide a covering arrangement for a motorcycle, allowing to confer good aerodynamics and overall look or appearance to a motorcycle. A further object of the present invention is that of providing a covering arrangement for a motorcycle allowing the driver to find a comfortable position for his legs, thus allowing him to enjoy a reliable and good driving feeling. The covering arrangement according to the present invention shall also be manufactured and assembled to a motorcycle in an easy way and at contained costs. In the same way, it shall be possible according to the present invention to easily remove said covering assembly (or parts or elements thereof) from a motorcycle in an easy way, during a contained time limit and at reasonable cost as the need arises (for instance when the covering arrangement or parts thereof need to be substituted or if access to component parts of the motorcycle has to be gained, for instance for maintenance purposes). In spite of the simplified assembly operations, a covering arrangement according to the present invention shall be reliably fixed to the motorcycle and shall not become detached or disjointed from it accidentally. The covering assembly according to the present invention shall also adequately match component parts of the motorcycle and shall be fixed to parts of the motorcycle (for instance the frame) offering adequate support and resistance. Finally, the covering assembly according to the present invention shall allow to meet a further requirement, namely that of having reduced weight, contained dimensions but still offering adequate resistance to impacts and therefore protection to component parts of the motorcycle.

In general terms, the present invention is based on the general consideration that the problems affecting prior art covering assemblies for motorcycles may be overcome by providing a covering assembly comprising a plurality of component parts exploiting different functions. Moreover, if these component parts are adequately designed and shaped, said component parts may perfectly match each other and the motorcycle so as to still confer the motorcycle good and pleasant overall look and appearance along with improved aerodynamics. Moreover, by providing several component parts adequately shaped and designed, said component parts may be separately removed from said motorcycle as the need arises (for maintenance and repair purposes or the like) with evident advantages in terms of reduced removal time due to the reduced dimensions and weight. Another consideration on which the present invention is based relates to the fact that, by providing several component parts adequately designed and shaped, even finding good and convenient locations for fixing said component parts to the motorcycle is simplified. Still a further consideration on which the present invention is based relates to the fact that convenient anchor points for the component parts of the covering arrangement or assembly may be found if said component parts are designed so as to extend essentially in the longitudinal direction of the motorcycle, in particular cross over the main frame (or tubes thereof) of the motorcycle. Still a further consideration on which the present invention is based relates to the fact that said several component parts may support each other reciprocally so that a reduced number of fixing means (screws, bolts or the like) is needed. On the basis of the considerations as stated above, according to the present invention, the problems affecting the prior art motorcycles are overcome or at least greatly reduced and the goals outlined above are met by the features defined in claim 1.

Preferred embodiments of the present invention are laid down in the dependent claims 2 to 22.

Further advantages, objects and features as well as embodiments of the present invention are defined in the appended claims and will become more apparent with the following detailed description when taken with reference to the accompanying drawings, in which identical or corresponding parts are identified by the same reference numerals. In particular, in the Drawings:
Figure 1 a relates to a schematic side view (from the left) of a motorcycle equipped with a cover arrangement according to the present invention;
Figure 1b relates to a schematic side view (from the right) of a motorcycle equipped with a cover arrangement according to the present invention;
Figure 2a relates to an schematic side view of a left side cover assembly belonging to the cover arrangement according to the present invention;
Figure 2b relates to a schematic side view of a right side cover assembly belonging to the cover arrangement according to the present invention;
Figure 3 relates to a top view of the right side cover assembly belonging to the cover arrangement according to the present invention;
Figure 4a relates to an exploded view of the left side cover assembly belonging to the cover arrangement according to the present invention;
Figure 4b relates to an exploded view of the right side cover assembly belonging to the cover arrangement according to the present invention;
Figure 5 relates to an exploded view showing the frame of a motorcycle;
Figure 6 relates to a front view showing the frame of a motorcycle.

While the present invention is described with reference to the embodiments as illustrated in the following detailed description as well as in the drawings, it has to be appreciated that the following detailed description as well as the drawings are not intended to limit the scope of the present invention to the particular illustrative embodiments disclosed, but rather the described illustrated embodiments merely exemplify the various aspects of the present invention, the scope of which is defined by the appended claims.

The present invention is understood to be of particular advantage when applied to two-wheeled motorcycles such as, for instance, motorbikes or the like. For this reason, examples will be given in the following, in which corresponding embodiments of the present invention are applied to motorcycles, in particular to motorbikes. However, it has to be noted that the applications of the present invention are not limited to the case of motorcycles, in particular to the case of motorbikes; on the contrary, the present invention may also be conveniently and advantageously applied to other motorcycles, in particular to three or even four-wheeled motorcycles such as, for instance choppers, quads or the like.

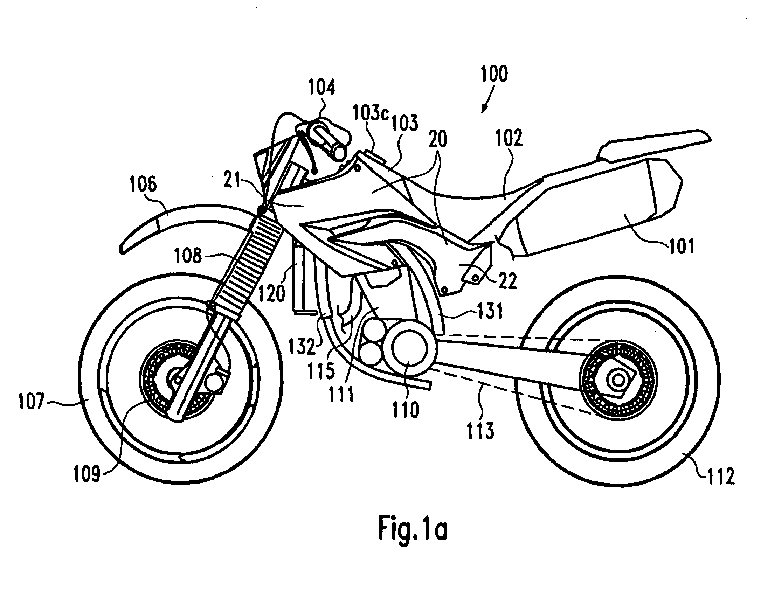

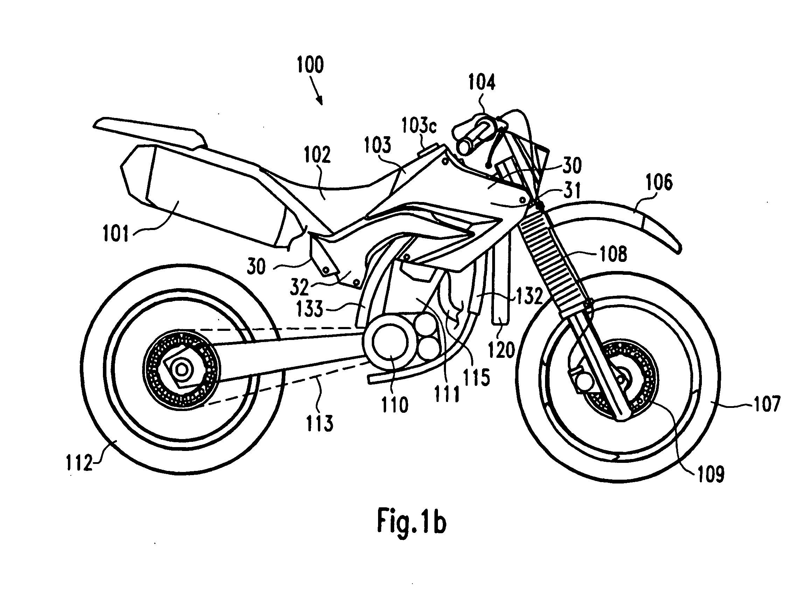

In the following, some details and features of the cover arrangement according to the present invention will be described with reference to Figures 1 a and 1 b.

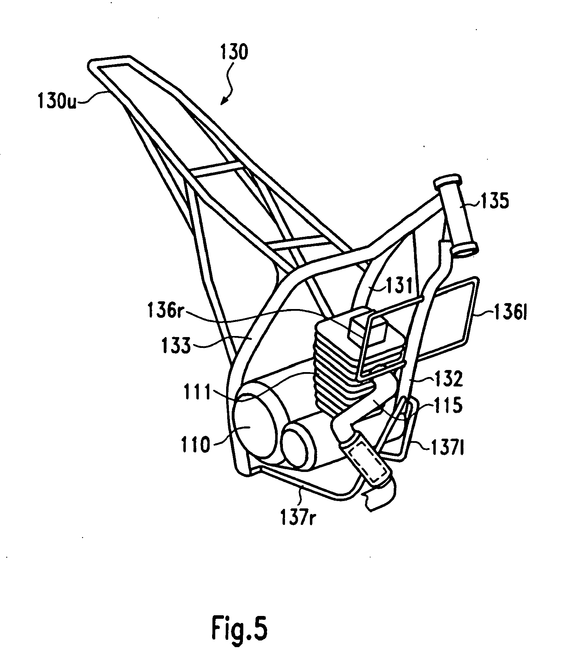

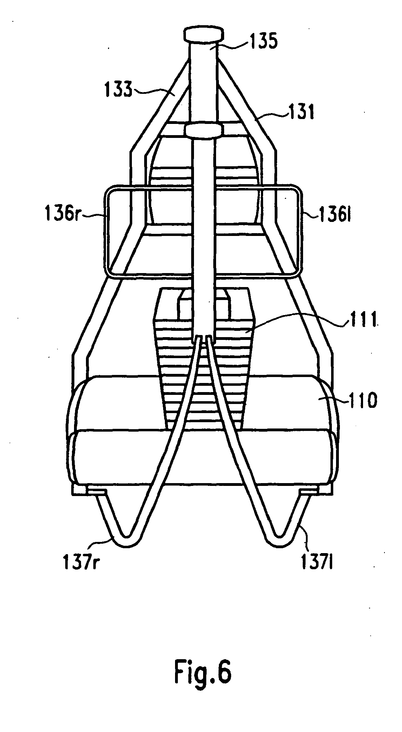

In Figures 1a and 1b, reference numeral 100 identifies a motorcycle. Although some portions and components or even accessories common to usual motorcycles have been omitted in Figures 1 a and 1 b for the sake of clarity, the usual features of common motorcycles have been depicted therein and relate in particular to a main engine 110 comprising a cylinder 111 (in the following also referred to as cylinder head or cylinder block 111), with said main engine 110 and said cylinder 111 being supported by a main frame (to be described in more detail in the following). The motorcycle 100 depicted in Figures 1 a and 1 b further comprises a seat 102 and a fuel tank 103 with a fuel tank tap 103c. Moreover, the motorcycle 100 depicted in Figures 1 a and 1 b further comprises a front wheel 107 supported by a front fork 108, said front wheel 107 also comprising a front brake disk 109; the front fork 108 is stably attached or fixed to the main frame by means of a pipe 135 (see also Figures 5 and 6).

In the same way, the motorcycle 100 depicted in Figures 1 a and 1 b comprises a rear wheel 112 with a sprocket, a chain 113 being further provided to transmit drive force to the rear wheel 112 through said rear sprocket. Reference 104 in Figures 1 a and 1 b identifies a handlebar provided with brake handles and corresponding cables extending therefrom to the brake disk 109. In more detail, reference numeral 106 identifies a front fender provided to prevent the motorcycle 100 and/or the driver or passenger from being splashed with mud. Reference numeral 115 in Figures 1 a and 1 b identifies an exhaust gas pipe extending from the cylinder 111 toward the rear of the motorcycle (toward the right in Figure 1a and toward to left in Figure 1b, respectively) and comprising an end portion 101. For instance, said end portion 101 may comprise a catalyst. As anticipated above, some usual components, parts and features of common motorcycles have been either omitted in Figures 1 a and 1 b or not identified by corresponding reference numerals for the sake of clarity; these features may relate for instance to a rear cushion, rear direction indicators, a rear fender, a speed reducer, details of the engine 110 or cylinder 11 or the like. Even if not essential to the present invention, these omitted or not identified features and/or their equivalents have to be considered as being comprised in the motorcycle depicted in Figure 1 a and 1 b.

In Figures 1a and 1b, there are furthermore depicted a left side cover assembly 20 and a right side cover assembly 30, respectively; these left and right side cover assemblies 20, 30 are adapted to be mounted on the left and the right side, respectively of the motorcycle 100 and belong to the cover arrangement according to the present invention. Said side cover arrangement is provided for the purpose of covering and/or protecting at least partially both the fuel tank 103 and component parts of the motorcycle 100 (such as, for instance, the cylinder 111) located beneath said fuel tank 103. To this end, the left and right side cover assemblies 20, 30 comprise left and right fuel tank cover elements 21 and 31, respectively, mounted in proximity of the fuel tank 103 so as to cover at least partially said fuel tank 103. As apparent from Figure 1 a and 1b, said left and right fuel tank cover elements 21, 31 are c-shaped and extend in the longitudinal direction of the motorcycle 100 so as to cover and/or protect at least partially component parts of the motorcycle (such as, for instance, the radiator 120) located in front of the cylinder or cylinder head 111 (between the front fork 108 and the cylinder 111). Moreover, said left and right fuel tank elements 21, 31 extend crossover the down tube 132, of the main frame of the motorcycle 100 (see also Figure 5). The left and right side cover assemblies 20, 30 further comprise left and right side cover elements 22, 32, respectively. As apparent from Figures 1a and 1b, said left and right side cover elements 22, 32 extend in the longitudinal direction of the motorcycle 100 (in particular crossover the left and right side tubes 131 and 133, respectively) with said left and right side tubes 131 and 133 extending downwardly on opposite sides of the motorcycle and belonging to the main frame of said motorcycle (see also Figures 5 and 6). As anticipated above, the overall cover arrangement according to the present invention, in particular its left and right side cover assemblies 20, 30, as well as their component parts (the left and right fuel tank cover elements 21, 31 and/or the left and right side cover elements 22, 32) are provided for covering and/or protecting at least partially the fuel tank 103 and/or component parts of the motorcycle located essentially in the space beneath said fuel tank 103. However, said cover arrangement, assemblies and/or elements further exploit the function of conferring the motorcycle 100 the desired aerodynamics, overall appearance and look, as well as the function of offering the driver of the motorcycle 100 the possibility to find a good and convenient position for his legs so as to be able to enjoy a good and comfortable driving feeling and/or comfort. Moreover, the cover arrangement and its component parts offer the driver an improved grip for his knees.

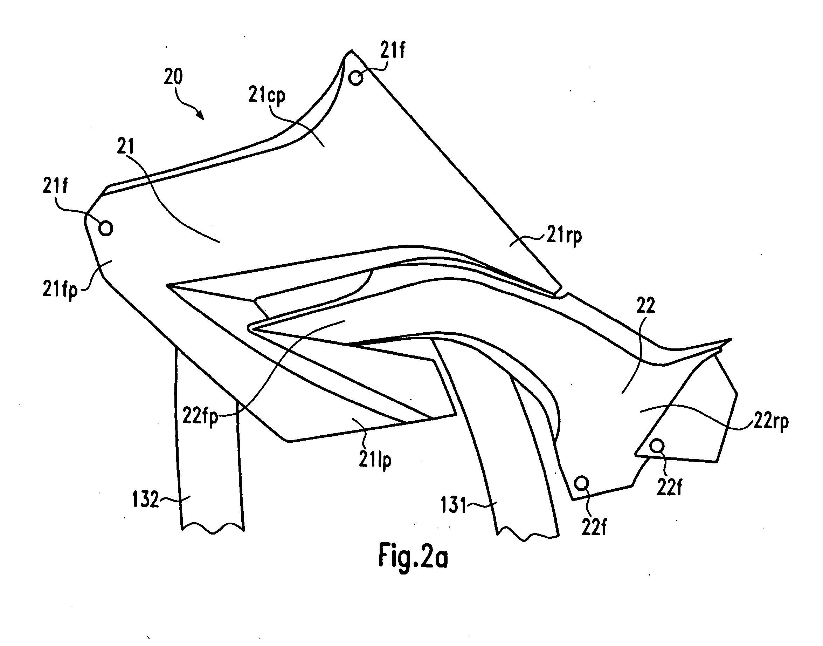

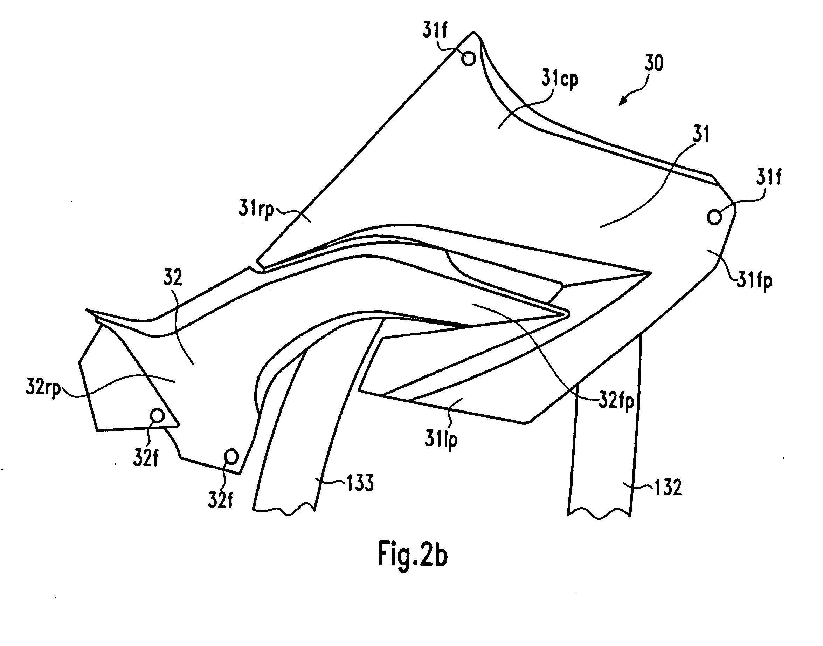

It may be appreciated from the above disclosure that some of the features of the present invention relate to the location, layout, design and reciprocal disposition of the cover arrangement of a motorcycle. In particular, it may be appreciated from the above disclosure that some of the features of the present invention relate to the location, layout, design, reciprocal disposition and performance of the component parts of said cover arrangement, in particular of the left and right side cover assemblies 20, 30, the left and right fuel tank cover elements 21, 31 and the left and right side cover elements 22, 32 belonging to said overall cover arrangement. Some of these features will be described in more detail in the following with reference to Figures 2a and 2b, wherein those features which have already been described above with reference to Figures 1a and 1b are identified by the same reference numerals.

In figures 2a and 2b, there are depicted the left and right side cover assemblies 20, 30 of the cover arrangement according to the present invention, respectively. In particular, in Figures 2a and 2b, the left side cover and fuel tank cover elements 22, 21 and the right side cover and fuel tank cover elements 32, 31, respectively are depicted in the reciprocal position they assume once mounted on or applied to a motorcycle, for instance the motorcycle 100 depicted in Figures 1 a and 1 b. In more detail, the left and right side cover elements 22, 32 have an elongated shape and comprise front portions 22fp and 32fp, respectively facing towards the front of the motorcycle 100. The left and right side cover elements 22, 32 further comprise rear end portions 22rp and 32rp, respectively facing toward to rear of the motorcycle (see also Figures 1 a and 1b). Moreover, an important feature of the cover arrangement according to the present invention relates to the fact that, as depicted in Figures 2a and 2b, the left and right side cover elements 22, 32 extend crossover the main frame of the motorcycle, in particular crossover the left and right side tubes 131, 133, respectively, belonging to said main frame. This in particular, offers the advantage that even the main frame of the motorcycle (in particular its left and right side tubes 131, 133 are at least partially protected by the left and right side cover elements 22, 32, respectively. Moreover, the left and right side cover elements 22, 32 can be conveniently fixed to the motorcycle, in particular convenient locations can be found for corresponding fixing means (to be described in the following) adapted for fixing the left and right side cover elements 22, 32 to the motorcycle.

It may be furthermore appreciated, when looking at Figures 2a and 2b, that the left and right fuel tank cover elements 21, 31 depicted therein are essentially c-shaped and comprise front portions 21fp, 31fp, respectively facing toward the front of the motorcycle once mounted on or fixed to said motorcycle. As it will be described in more detail in the following, the fact that the left and right fuel tank cover elements 21, 31 are c-shaped allow said left and right fuel tank cover elements 21, 31 to support said left and right side cover elements 22, 32, respectively, or at least to help said left and right side cover elements 22, 32 to be firmly kept in place and/or in position so that only a reduced number of fixing means (such as, for instance, screws, bolts, or the like) are needed to this end. The left and right fuel tank cover elements 21, 31 further comprise central portions 21 cp and 31 cp, respectively, with said central portions 21 cp and 31 cp being located in proximity of the fuel tank 103 once said left and right fuel tank cover elements have been mounted on the motorcycle. The left and right fuel tank cover elements 21, 31 further comprise rear end portions 21 rp and 31 rp, respectively, facing toward the rear of the motorcycle. Finally, the left and right fuel tank cover elements 21, 31 further comprise lower portions 21lp and 31lp, respectively, essentially opposite to said central portions 21 cp and 31 cp, respectively. The left and right fuel tank cover elements extend crossover the main frame of the motorcycle, in particular crossover the down tube 132 (see also Figures 5 and 6). Also this solution allows to simplify the mounting operation needed for mounting the left and right fuel tank cover elements 21 and 31 on the motorcycle and allows furthermore to find convenient locations for fixing means such as, for instance, screws, bolts, or the like adapted to this end. In particular, with respect to said fixing means, some of them have been depicted in Figure 2a and 2b; these fixing means comprise fixing means 21f and 31f adapted for fixing to the motorcycle the left and right fuel tank cover elements 21 and 31, respectively, as well as fixing means 22f and 32f adapted for fixing to said motorcycle the left and right side cover elements 22 and 32. It may be in particular appreciated, when looking at Figures 2a and 2b in combination with Figures 1 a and 1 b, that said fixing means 21f and 22f, as well said fixing means 31f and 32f are provided at predefined locations and allow to fix said left and right side end fuel tank cover elements for instance to the fuel tank 103 or other component parts of the motorcycle 100.

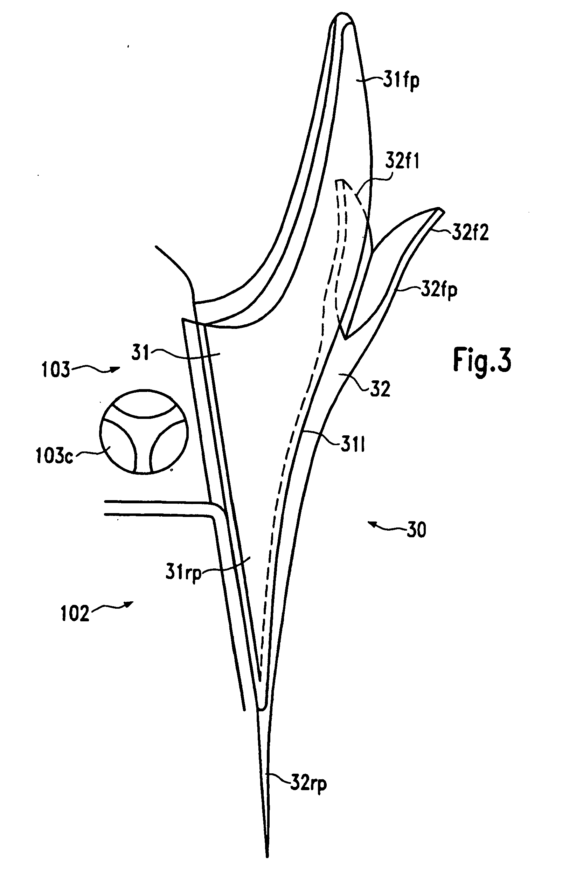

Additional features and/or details of the cover arrangement of the present invention will be described in the following with reference to Figures 3 wherein, as usual, details and all features of said cover arrangement already described above with reference to previous Figures are identified by the same reference numerals.

In Figure 3, there is depicted a top view of the right cover assembly 30 of the cover arrangement according to the present invention; it has however to be understood that the considerations stated below also apply to the left side cover assembly. As apparent from Figure 3, the right fuel tank cover element 31 is located in proximity of the fuel tank 103 and extends downwardly therefrom. Moreover, the front portion 31 fp and the rear portion 31 rp of said right fuel tank cover element extend toward the front and the rear of the motorcycle, respectively. The front portion 32fp of the side cover element 32 comprises a tip-shaped portion 32f2 facing outwardly with respect to the motorcycle. This solution allows in particular to offer a good knee grip for the driver of the motorcycle. The front portion 32fp of the right side cover element 32 further comprises a second tip-shaped portion 32f1 opposite to said first tip-shaped portion 32f2 and facing therefore inwardly with respect to the motorcycle. In particular, in Figure 3, this second tip-shaped portion 32f1 is depicted in dashed lines meaning that said second tip-shaped portion 32f1, once said fuel tank element 31 and said side cover element 32 have been mounted on the motorcycle, is located beneath said fuel tank cover element 32 so as to be at least partially covered and hidden to a viewer looking at the motorcycle from the right side thereof. This offers a good anchoring for the side cover element 32, in particular for its front portion 32fp which cannot be accidentally moved or detached out toward the outside. Accordingly, there is a reduded need for fixing means such as screws, bolts or the like for keeping said front portion 32fp of said side cover element 32 in its desired position.

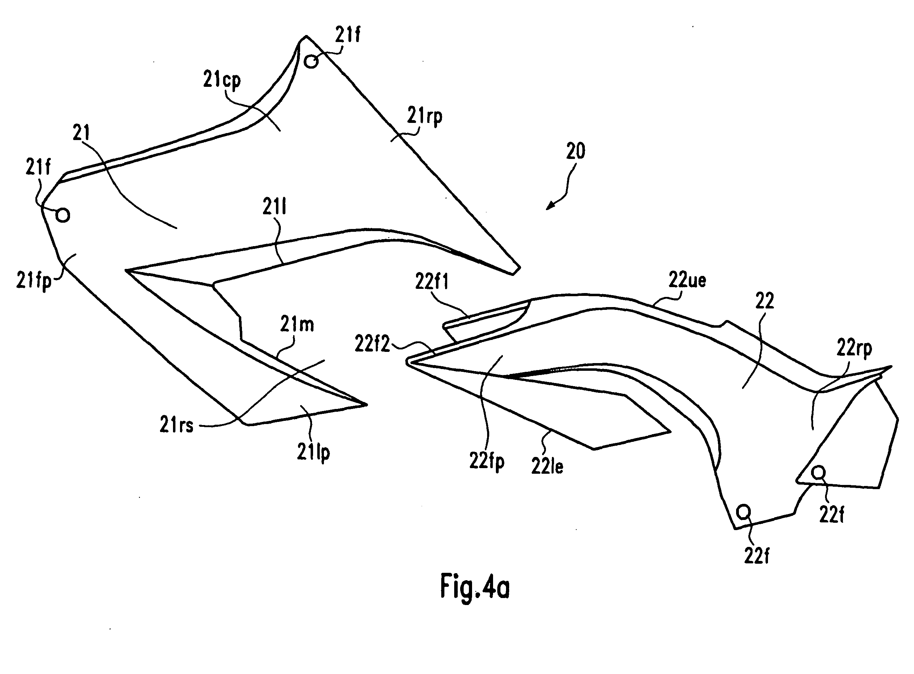

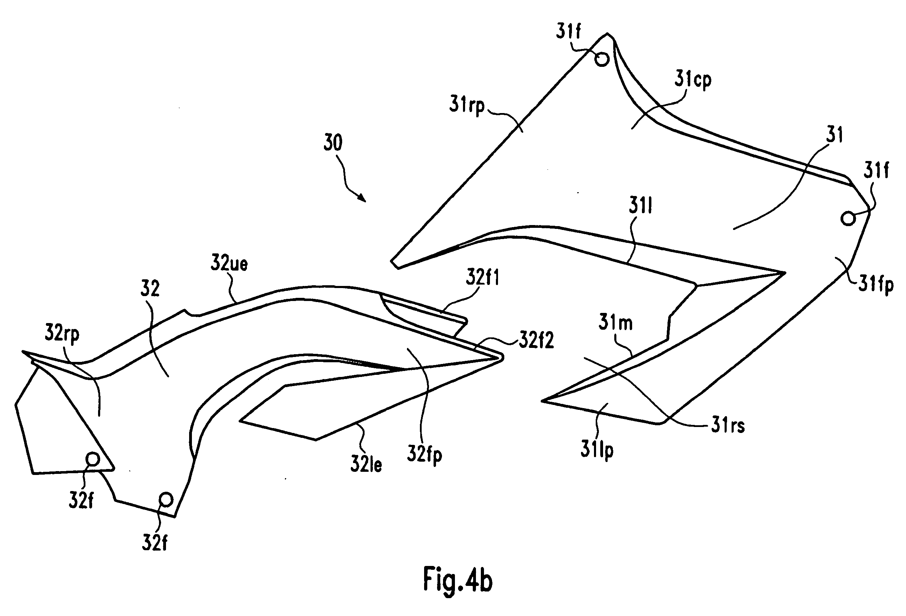

In the following, with reference to Figures 4a and 4b, further details of the cover arrangement of the present invention will be described; again, in Figures 4a and 4b, features and/or details already described with reference to previous Figures are identified by the same reference numerals.

It appears in particular, when looking at Figure 4a, that the central portion 21 cp, the rear end portion 21 rp and the lower portion 21lp of the left fuel tank cover element 21 define in cooperation, a receiving seat 21 rs adapted to receive the front portion 22fp of the left side cover element 22 in the way depicted in Figure 3. In particular, said central portion 21 cp and said rear end portion 21 rp of said left fuel tank cover element 21 define, in cooperation, a lower edge 21l facing downwardly toward the bottom and toward the receiving seat 21 rs. This lower edge 21l engages or cooperates with the upper edge 22ue of the left side cover element 22. Moreover, the lower portion 21lp of the fuel tank cover element 21 defines an upper edge 21 m facing upwardly toward the receiving seat 21 rs and opposite to the lower edge 21l; once the left fuel tank and side cover elements 21 and 22 have been put in place as depicted in Figure 2a, said upper edge 21 m cooperates with or engages the lower edge 22le of the side cover element 22. The above disclosure given with reference to Figure 4a also applies to the right fuel tank and side cover elements 31, 32 depicted in Figure 4b. That means that the central portion 31cp, the rear end portion 31 rp and the lower portion 31lp of the right fuel tank cover element 31 define in cooperation, a receiving seat 31 rs adapted to receive the front portion 32fp of the right side cover element 32 in a way corresponding to that depicted in Figure 3. In particular, said central portion 31cp and said rear end portion 31 rp of said right fuel tank cover element 31 define, in cooperation, a lower edge 31l facing downwardly toward the bottom and toward the receiving seat 31 rs. This lower edge 31l engages or cooperates with the upper edge 32ue of the right side cover element 32. Moreover, the lower portion 31lp of the right fuel tank cover element 31 defines an upper edge 31 m facing upwardly toward the receiving seat 31 rs and opposite to the lower edge 31l; once the left fuel tank and side cover elements 31 and 32 have been put in place as depicted in Figure 2b, said upper edge 31 m cooperates with or engages the lower edge 32le of the side cover element 32.

In Figures 5 and 6, reference numeral 130 identifies the main frame of a motorcycle; said main frame will be described in the following in detail for the purpose of highlighting one possible way according to which the cover arrangement according to the present invention (the cover assemblies, fuel tank and side cover elements thereof) may be fixed to a motorcycle. The main frame 130 comprises a u-shaped tube 130u extending along the longitudinal direction of the motorcycle and supporting the seat 102 and the fuel tank 103. The main frame 130 further comprises a head pipe 135 (with the front fork 108 extending therefrom) and a down tube 132 extending downwardly from said head pipe or tube 135. Moreover, a right side tube 133 and a left side tube 131 extend downwardly and rearwardly from said head pipe 135 on opposite sides of the motorcycle i.e. on the right and on the left side of said motorcycle. The right down tube 133 is joined to the down tube 132 by means of a bottom right side tube 137r, whilst the left side tube 131 is joined to the down tube 132 by means of a left bottom tube 137l. The plurality of tubes cited above and belonging to the main frame 130, in particular the left and right side tubes 131 and 133, and the down tube 132, support, along with the bottom tubes 137r and 137l the main engine 110 and the cylinder or cylinder head 111. A left u-shaped tube 136l is fixed to the down tube 132 on the left side thereof; in the same way, a right u-shaped tube 136r is fixed to the down tube 132 on the right side thereof. Said left and right u-shaped tubes 1361 and 136r may exploit the function of supporting component parts of the motorcycle such as, for instance, the radiator, the battery or the like. However, said left and right u-shaped tubes 136l and 136r also exploit the function of offering anchoring points for the left end right side cover assemblies 20, 30, respectively. In particular, according to a particular embodiment of the present invention, the front portions 21fp, 31fp of the left end right fuel tank cover elements 21, 31, respectively, may be fixed to said left and right u-shaped tubes 1361, 136r, respectively by means of screws, bolts or the like.

It arises therefore from the above disclosure that the layout of the cover arrangement according to the present invention allows the drawbacks affecting the prior art cover arrangements and/or assemblies to be overcome or at least strongly reduced or minimized. In particular, it has been demonstrated with the above disclosure that the cover arrangement according to the present invention confers good appearance and look as well as good aerodynamics to the motorcycle to which it is applied. Moreover, the cover arrangement according to the present invention may be quickly and easily applied to the motorcycle and with a reduced number of fixing means such as, for instance, bolts, screws or the like. This in particular is due to the fact that the cover arrangement according to the present invention comprises separated elements (the fuel tank elements and the side cover elements) which can be mounted on and/or removed from the motorcycle, separately, when the need arises. Moreover, since these fuel tank and side cover elements cooperate with each other (the left and right fuel tank cover elements cooperate with or engage the left and right side cover elements, respectively), said elements may be reliably fixed to the motorcycle without any risk that one or more of said elements become accidentally disengaged or detached from said motorcycle. Also the resistance to impacts is improved by the fact that the fuel tank cover elements cooperate with or engage the side cover elements. Finally, the particular shape of the side cover assemblies according to the present invention, in particular that of the left and right side cover elements of the cover arrangement according to the present invention offer the possibility to the driver to find a convenient position for his legs with a corresponding improved knee grip.

While the present invention has been described with reference to the particular embodiments depicted in the drawings, it has to be understood that the present invention is not limited to the particular embodiments described, but rather that various amendments may be introduced into the embodiments described without departing from the scope of the present invention, which is defined by the appended claims.

## Claims

1. A cover arrangement for a motorcycle (100), said cover arrangement comprising a left side cover assembly (20) adapted to be mounted on the left side of said motorcycle (100) and a right side cover assembly (30) adapted to be mounted on the right side of said motorcycle (100) said left and right side cover assembles (20, 30) comprising left and right side cover elements (22, 32), respectively, and left and right fuel tank cover elements (21, 31), respectively, adapted to cover at least partially the fuel tank (103) of said motorcycle (100), said left and right side cover elements (22, 32), once mounted on said motorcycle, extending in the longitudinal direction of said motorcycle cross over the main frame of said motorcycle, and comprising front portions (22fp, 32fp), respectively, with tip shaped portions (22f2, 32f2) facing away from said motorcycle (100); **characterized in that** said left and right fuel tank cover elements (21, 31) are substantially c-shaped so as to define receiving seats (21 rs, 31 rs) receiving at least partially said front portions (22fp, 32fp) of said left and right side cover elements (22, 32), respectively, once said left and right fuel tank cover elements (21, 31) and said left and right side cover elements (22, 32) are mounted on said motorcycle (100).

2. A cover arrangement as claimed in claim 1, **characterized in that** said left and right side cover elements (22, 32), once mounted on said motorcycle (100) extend cross over substantially vertical left and right tubes (131, 133) of said main frame, respectively.

3. A cover arrangement as claimed in one of claims 1 and 2, **characterized in that,** said left and right side cover elements comprise rear portions (22rp, 32rp), respectively, facing toward the rear of said motorcycle (100), with fixing means (22f, 32f) located in said rear portions (22rp, 32rp), respectively, allowing said left and right side cover elements (22, 32) to be fixed to said motorcycle (100).

4. A cover arrangement as claimed in claim 3, **characterized in that** said fixing means (22f, 32f) are adapted to fix said rear portions (22rp, 32rp) of said left and right cover elements (22, 32), respectively, to parts of said motorcycle other than said left and right tubes (131, 133).

5. A cover arrangement as claimed in one of claims 1 to 4, **characterized in that** said left and right fuel tank cover elements (21, 31) comprise front portions (21fp, 31fp), respectively, adapted to be fixed to said main frame of said motorcycle (100) by means of fixing means (21f, 31f), respectively.

6. A cover arrangement as claimed in claim 5, **characterized in that** said front portions (21 f, 31f) are adapted to be fixed to U-shaped elements (1361, 136r), respectively, extending from a down tube 132 of said main frame on opposite sides thereof.

7. A cover arrangement as claimed in one of claims 5 or 6, **characterized in that** said left and right fuel tank cover elements (21, 31) comprise central portions (21cp, 31cp), respectively, adapted to be fixed to the fuel tank (103) of said motorcycle (100) by means of fixing means (21f, 31f), respectively.

8. A cover arrangement as claimed in claim 7, **characterized in that** said left and right fuel tank cover elements (21, 31) comprise lower portions (21lp, 31lp), respectively, opposite to said central portions (21cp, 31cp) and facing downwardly.

9. A cover arrangement as claimed in claim 8, **characterized in that** said lower portions (21lp, 31lp), together with said central portions (21cp, 31cp), respectively, define said receiving seats (21 rs, 31 rs) adapted to receive at least partially said front portions (22fp, 32fp) of said left and right side cover elements (22, 32), respectively.

10. A cover arrangement as claimed in claim 9, **characterized in that** said receiving seats (21rs, 31 rs) are limited by lower and upper edges (21l, 21m) and (31 m, 311) of said central and lower portions (21 cp, 21lp) and (31 cp, 31lp), respectively, and **in that** said lower edges (21l, 31l) engage said front portions (22fp, 32fp) of said left and right cover elements (22, 32), respectively, once said left and right fuel tank cover elements (21, 31) and said left and right side cover elements (22, 32) are mounted on said motorcycle (100).

11. A cover arrangement as claimed in claim 10, **characterized in that** said front portions (22fp, 32fp) of said left and right side cover elements (22, 32) further comprise second tip shaped portions (22f1, 32f1), respectively, and **in that** said lower edges (211, 311) are received between said tip shaped portions (22f2, 22f1) and (32f2, 32f1), respectively.

12. A motorcycle (100) comprising a fuel tank (103) and a main frame supporting said fuel tank (103), **characterized in that** said motorcycle comprises a cover arrangement as claimed in one of claims 1 to 11, and **in that** said left and right side cover elements (22, 32) extend in the longitudinal direction of said motorcycle cross over the main frame of said motorcycle, and comprise front portions (22fp, 32fp), respectively, with tip shaped portions (22f2, 32f2) facing away from said motorcycle (100) and **in that** said left and right fuel tank cover elements (21, 31) are substantially c-shaped so as to define receiving seats (21rs, 31 rs) receiving at least partially said front portions (22fp, 32fp) of said left and right side cover elements (22, 32), respectively.

13. A motorcycle (100) as claimed in claim 12, **characterized in that** said main frame comprises left and right tubes (131, 133) extending substantially vertically, and **in that** said motorcycle (100) comprises a cover arrangement as claimed in claim 2, with said left and right side cover elements extending cross over said left and right tubes (131, 133) of said main frame, respectively.

14. A motorcycle (100) as claimed in one of claims 12 and 13, **characterized in that,** said motorcycle comprises a cover arrangement as claimed in claim 3, with said left and right side cover elements comprising rear portions (22rp, 32rp), respectively, facing toward the rear of said motorcycle (100), with fixing means (22f, 32f) located in said rear portions (22rp, 32rp), respectively, by means of which said left and right side cover elements (22, 32) are fixed to said motorcycle (100).

15. A motorcycle (100) as claimed in claim 14, **characterized in that** said motorcycle comprises a cover arrangement as claimed in claim 4, with said fixing means (22f, 32f) fixing said rear portions (22rp, 32rp) of said left and right cover elements (22, 32), respectively, to parts of said motorcycle other than said left and right tubes (131, 133).

16. A motorcycle (100) as claimed in one of claims 12 to 15, **characterized in that** said motorcycle comprises a cover arrangement as claimed in claim 5, with said left and right fuel tank cover elements (21, 31) comprising front portions (21fp, 31 fp), respectively, fixed to said main frame of said motorcycle (100) by means of fixing means (21f, 31f), respectively.

17. A motorcycle (100) as claimed in claim 16, **characterized in that** said motorcycle comprises a cover arrangement as claimed in claim 6, with said front portions (21 f, 31f) being fixed to U-shaped elements (1361, 136r), respectively of said main frame supporting the radiator of said motorcycle (100).

18. A motorcycle (100) as claimed in one of claims 16 or 17, **characterized in that** said motorcycle comprises a cover arrangement as claimed in claim 7, with said left and right fuel tank cover elements (21, 31) comprising central portions (21cp, 31cp), respectively, fixed to the fuel tank (103) of said motorcycle (100) by means of fixing means (21f, 31f), respectively.

19. A motorcycle as claimed in claim 18, **characterized in that** said motorcycle comprises a cover arrangement as claimed in claim 8, with said left and right fuel tank cover elements (21, 31) comprising lower portions (21lp, 31lp), respectively, opposite to said central portions (21cp, 31cp) and facing downwardly.

20. A motorcycle (100) as claimed in claim 19, **characterized in that** said motorcycle comprises a cover arrangement as claimed in claim 9, with said lower portions (21lp, 31lp), together with said central portions (21 cp, 31 cp), respectively, defining said receiving seats (21rs, 31rs) receiving at least partially said front portions (22fp, 32fp) of said left and right side cover elements (22, 32), respectively.

21. A motorcycle as claimed in claim 20, **characterized in that** said motorcycle comprises a cover arrangement as claimed in claim 10, with said receiving seats (21rs, 31 rs) being limited by lower and upper edges (21l, 21m) and (31m, 31l) of said central and lower portions (21cp, 21lp) and (31cp, 31lp), respectively, with said lower edges (21l, 31l) engaging said front portions (22fp, 32fp) of said left and right cover elements (22, 32), respectively.

22. A motorcycle as claimed in claim 21, **characterized in that** said motorcycle comprises a cover arrangement as claimed in claim 11, with said front portions. (22fp, 32fp) of said left and right side cover elements (22, 32) further comprising second tip shaped portions (22f1, 32f1), respectively, said lower edges (21l, 31l) being received between said tip shaped portions (22f2, 22f1) and (32f2, 32f1), respectively.

## Patentansprüche

1. Verkleidungsanordnung für ein Motorrad (100), wobei die Verkleidungsanordnung eine Verkleidungsbaugruppe (200) der linken Seite, die zur Anbringung an der linken Seite des Motorrades (100) eingerichtet ist, und eine Verkleidungsbaugruppe (30) der rechten Seite umfasst, die zur Anbringung an der rechten Seite des Motorrades (100) eingerichtet ist, die Verkleidungsanordnungen (20, 30) der linken und der rechten Seite Verkleidungselemente (22, 32) der linken bzw. der rechten Seite und ein linkes bzw. rechtes Kraftstofftank-Verkleidungselement (3) umfassen, die so eingerichtet sind, dass sie den Kraftstofftank (103) des Motorrades (100) wenigstens teilweise verkleiden, sich die Verkleidungselemente (22, 32) der linken und der rechten Seite, wenn sie an dem Motorrad angebracht sind, in der Längsrichtung des Motorrades quer über den Hauptrahmen des Motorrades erstrecken und jeweils vordere Abschnitte (5) mit spitzenförmigen Abschnitten (6) umfassen, die von dem Motorrad (100) weggewandt sind, **dadurch gekennzeichnet, dass** das linke und das rechte Kraftstofftank-Verkleidungselement (7) im wesentlichen C-förmig sind und aufnehmende Sitze (8) aufweisen, die die vorderen Abschnitte (9) der Verkleidungselemente (10) der linken bzw. rechten Seite wenigstens teilweise aufnehmen, wenn das linke und das rechte Kraftstofftank-Verkleidungselement (11) sowie die Verkleidungselemente (12) der linken und der rechten Seite an dem Motorrad (100) angebracht sind.

2. Verkleidungsanordnung nach Anspruch 1, **dadurch gekennzeichnet, dass** sich die Verkleidungselemente (13) der linken und der rechten Seite, wenn sie an dem Motorrad (100) angebracht sind, quer zu im wesentlichen vertikalen linken bzw. rechten Rohren (15) des Hauptrahmens erstrecken.

3. Verkleidungsanordnung nach einem der Ansprüche 1 und 2, **dadurch gekennzeichnet, dass** die Verkleidungselemente der linken und der rechten Seite jeweils hintere Abschnitte (15) umfassen, die zur Rückseite des Motorrades (100) hin gewandt sind, wobei sich Befestigungseinrichtungen (16) jeweils in den hinteren Abschnitten (17) befinden, die Befestigung der Verkleidungselemente (18) der linken und der rechten Seite an dem Motorrad (100) zulassen.

4. Verkleidungsanordnung nach Anspruch 3, **dadurch gekennzeichnet, dass** die Befestigungseinrichtungen (19) so eingerichtet sind, dass sie die hinteren Abschnitte (20) des linken und des rechten Verkleidungselementes jeweils an anderen Teilen des Motorrades als dem linken und dem rechten Rohr (22) befestigen.

5. Verkleidungsanordnung nach einem der Ansprüche 1 bis 4, **dadurch gekennzeichnet, dass** das linke und das rechte Kraftstofftank-Verkleidungselement (23) jeweils vordere Abschnitte (24) umfassen, die so eingerichtet sind, dass sie mittels Befestigungseinrichtungen (25) jeweils an dem Hauptrahmen des Motorrades (100) befestigt werden.

6. Verkleidungsanordnung nach Anspruch 5, **dadurch gekennzeichnet dass** die vorderen Abschnitte (26) so eingerichtet sind, dass sie jeweils an U-förmigen Elementen (27) befestigt werden, die sich von einem Unterrohr (132) des Hauptrahmens an einander gegenüberliegenden Seiten desselben erstrecken.

7. Verkleidungsanordnung nach einem der Ansprüche 5 oder 6, **dadurch gekennzeichnet, dass** das linke und das rechte Kraftstofftank-Verkleidungselement (28) jeweils mittlere Abschnitte (29) umfassen, die so eingerichtet sind, dass sie mittels Befestigungseinrichtungen (30) jeweils an dem Kraftstofftank (103) des Motorrades (100) befestigt sind.

8. Verkleidungsanordnung nach Anspruch 7, **dadurch gekennzeichnet, dass** das linke und das rechte Kraftstofftank-Verkleidungselement (31) jeweils untere Abschnitte (32) umfassen, die den mittleren Abschnitten (33) gegenüberliegen und nach unten gerichtet sind.

9. Verkleidungsanordnung nach Anspruch 8, **dadurch gekennzeichnet, dass** die unteren Abschnitte (34) zusammen mit dem mittleren Abschnitt (35) jeweils die aufnehmenden Sitze (36) bilden, die so eingerichtet sind, dass sie die vorderen Abschnitte (37) der Verkleidungselemente (38) der linken bzw. rechten Seite wenigstens teilweise aufnehmen.

10. Verkleidungsanordnung nach Anspruch 9, **dadurch gekennzeichnet, dass** die aufnehmenden Sitze (39) durch untere (40) und obere (41) Kanten der mittleren (42) bzw. unteren (43) Abschnitte begrenzt werden, und dass die unteren Kanten (44) mit den vorderen Abschnitten (45) des linken bzw. rechte Verkleidungselementes (46) in Eingriff kommen, wenn das linke und das rechte Kraftstofftank-Verkleidungselement (47) und die Verkleidungselemente (48) der linken und der rechten Seite an dem Motorrad (100) angebracht sind.

11. Verkleidungsanordnung nach Anspruch 10, **dadurch gekennzeichnet, dass** die vorderen Abschnitte (49) der Verkleidungselemente (50) der linken und der rechten Seite des Weiteren jeweils zweite spitzenförmige Abschnitte (51) umfassen, und dass die unteren Kanten (52) zwischen den spitzenförmigen Abschnitten (53) bzw. (54) aufgenommen werden.

12. Motorrad (100), das einen Kraftstofftank (103) und einen Hauptrahmen umfasst, der den Kraftstofftank (103) trägt, **dadurch gekennzeichnet, dass** das Motorrad eine Verkleidungsanordnung nach einem der Ansprüche 1 bis 11 umfasst und dass sich die Verkleidungselemente (45) der linken und der rechten Seite in der Längsrichtung des Motorrades quer über den Hauptrahmen des Motorrades erstrecken und jeweils vordere Abschnitte (56) mit spitzenförmigen Abschnitten (57) umfassen, die von dem Motorrad (100) weggewandt sind, und dass das linke und das rechte Kraftstofftank-Verkleidungselement (58) im wesentlichen C-förmig sind und aufnehmende Sitze (59) aufweisen, die die vorderen Abschnitte (60) der Verkleidungselemente (61) der linken bzw. der rechten Seite wenigstens teilweise aufnehmen.

13. Motorrad (100) nach Anspruch 12, **dadurch gekennzeichnet, dass** der Hauptrahmen ein linkes und ein rechtes Rohr (62) umfasst, die sich im wesentlichen vertikal erstrecken, und dass das Motorrad (100) eine Verkleidungsanordnung nach Anspruch 2 umfasst, wobei sich die Verkleidungselemente der linken und der rechten Seite quer über das linke bzw. das rechte Rohr (63) des Hauptrahmens erstrecken.

14. Motorrad (100) nach einem der Ansprüche 12 und 13, **dadurch gekennzeichnet, dass** das Motorrad eine Verkleidungsanordnung nach Anspruch 3 umfasst, wobei die Verkleidungselemente der linken und der rechten Seite jeweils hintere Abschnitte (64) umfassen, die zur Rückseite des Motorrades (100) hin gewandt sind, und sich Befestigungseinrichtungen (65) jeweils in den hinteren Abschnitten (66) befinden, mit denen die Verkleidungselemente (67) der linken und der rechten Seite an dem Motorrad (100) befestigt sind.

15. Motorrad (100) nach Anspruch 14, **dadurch gekennzeichnet, dass** das Motorrad eine Verkleidungsanordnung nach Anspruch 4 umfasst, wobei die Befestigungseinrichtungen (68) die hinteren Abschnitte (69) des linken bzw. rechten Verkleidungselementes (70) an anderen Teilen des Motorrades als dem linken und dem rechten Rohr (71) befestigen.

16. Motorrad (100) nach einem der Ansprüche 12 bis 15, **dadurch gekennzeichnet, dass** das Motorrad eine Verkleidungsanordnung nach Anspruch 5 umfasst, wobei das linke und das rechte Kraftstofftank-Verkleidungselement (72) jeweils vordere Abschnitte (73) umfassen, die mittels Befestigungseinrichtungen (74) jeweils an dem Hauptrahmen des Motorrades (100) befestigt sind.

17. Motorrad (100) nach Anspruch 16, **dadurch gekennzeichnet, dass** das Motorrad eine Verkleidungsanordnung nach Anspruch 6 umfasst, wobei die vorderen Abschnitte (75) jeweils an U-förmigen Elementen (76) des Hauptrahmens befestigt sind, die den Kühler des Motorrades (100) tragen.

18. Motorrad (100) nach einem der Ansprüche 16 oder 17, **dadurch gekennzeichnet, dass** das Motorrad eine Verkleidungsanordnung nach Anspruch 7 umfasst, wobei das linke und das rechte Kraftstofftank-Verkleidungselement (77) jeweils mittlere Abschnitte (78) umfassen, die mittels Befestigungseinrichtungen (79) jeweils an dem Kraftstofftank (103) des Motorrades (100) befestigt sind.

19. Motorrad nach Anspruch 18, **dadurch gekennzeichnet, dass** das Motorrad eine Verkleidungsanordnung nach Anspruch 8 umfasst, wobei das linke und das rechte Kraftstofftank-Verkleidungselementen (80) jeweils untere Abschnitte (81) umfassen, die den mittleren Abschnitten (82) gegenüberliegen und nach unten gerichtet sind.

20. Motorrad (100) nach Anspruch 19, **dadurch gekennzeichnet, dass** das Motorrad eine Verkleidungsanordnung nach Anspruch 9 umfasst, wobei die unteren Abschnitte (83) zusammen mit den mittleren Abschnitten (84) jeweils die aufnehmenden Sitze (85) bilden, die die vorderen Abschnitte (86) der Abdeckungselemente (87) der linken bzw. rechten Seite wenigstens teilweise aufnehmen.

21. Motorrad nach Anspruch 20, **dadurch gekennzeichnet, dass** das Motorrad eine Verkleidungsanordnung nach Anspruch 10 umfasst, wobei die aufnehmenden Sitze (88) durch untere (89) und obere (90) Kanten der mittleren (91) bzw. unteren (92) Abschnitte begrenzt sind, und die unteren Kanten (93) mit den vorderen Abschnitten (94) des linken bzw. rechten Verkleidungselementes (95) in Eingriff kommen.

22. Motorrad nach Anspruch 21, **dadurch gekennzeichnet, dass** das Motorrad eine Verkleidungsanordnung nach Anspruch 11 umfasst, wobei die vorderen Abschnitte (96) der Verkleidungselemente (97) der linken und der rechten Seite des Weiteren jeweils zweite spitzenförmige Abschnitte (98) umfassen, und die unteren Kanten (99) zwischen den spitzenförmigen Abschnitten (100) bzw. (101) aufgenommen werden.

## Revendications

1. Agencement de couvercle destiné à une motocyclette (100), ledit agencement comprenant un ensemble couvercle de côté gauche (20) conçu pour être monté du côté gauche de ladite motocyclette (100) et un ensemble couvercle de côté droit (30) conçu pour être monté du côté droit de ladite motocyclette (100), lesdits ensembles couvercles de côtés gauche et droit (20, 30) comprenant des éléments de couvercle de côtés gauche et droit (22, 23), respectivement, et des éléments de couvercle de réservoir de carburant gauche et droit (21, 31), respectivement, conçus pour recouvrir au moins partiellement le réservoir de carburant (103) de ladite motocyclette (100), lesdits éléments de couvercle de côtés gauche et droit (22, 32), une fois montés sur ladite motocyclette, s'étendant dans le sens de la longueur de ladite motocyclette de part et d'autre du châssis principal de ladite motocyclette, et comprenant des parties antérieures (22fp, 32fp), respectivement, comprenant des parties en forme de pointe (22f2, 32f2) orientées à l'opposé de ladite motocyclette (100) ; **caractérisé en ce que** lesdits éléments de couvercle de réservoir de carburant gauche et droit (21, 31) sont sensiblement en forme de C de façon à définir des sièges de réception (21 rs, 31 rs) recevant au moins partiellement lesdites parties antérieures (22fp, 32fp) desdits éléments de couvercle de côtés gauche et droit (22, 32), respectivement, une fois que lesdits éléments de couvercle de réservoir de carburant gauche et droit (21, 31) et que lesdits éléments de couvercle de côtés gauche et droit (22, 32) sont montés sur ladite motocyclette (100).

2. Agencement de couvercle conformément à la revendication 1, **caractérisé en ce que** lesdits éléments de couvercle de côtés gauche et droit (22, 32), une fois montés sur ladite motocyclette (100), s'étendent respectivement de part et d'autre de tubes gauche et droit sensiblement verticaux (131, 132) dudit châssis principal.

3. Agencement de couvercle conformément à la revendication 1 ou 2, **caractérisé en ce que** lesdits éléments de couvercle de côtés gauche et droit comprennent des parties arrière (22rp, 32 rp), respectivement, tournées vers l'arrière de ladite motocyclette (100), des moyens de fixation (22f, 32f) situés respectivement dans lesdites parties arrière (22rp, 32rp) permettant une fixation desdits éléments de couvercle de côtés gauche et droit (22, 32) sur ladite motocyclette (100).

4. Agencement de couvercle conformément à la revendication 3, **caractérisé en ce que** lesdits moyens de fixation (22f, 32f) sont conçus pour la fixation desdites parties arrière (22rp, 32rp) desdits éléments de couvercle de côtés gauche et droit (22, 32), respectivement, sur des parties de ladite motocyclette autre que lesdits tubes gauche et droit (131, 133).

5. Agencement de couvercle conformément à l'une des revendications 1 à 4, **caractérisé en ce que** lesdits éléments de couvercle de réservoir de carburant gauche et droit (21, 31) comprennent des parties antérieures (21fp, 31fp), respectivement, conçues pour être fixées sur le châssis principal de ladite motocyclette (100) à l'aide de moyens de fixation (21 f, 31 f), respectivement.

6. Agencement de couvercle conformément à la revendication 5, **caractérisé en ce que** lesdites parties antérieures (21f, 31f) sont conçues pour être fixées sur des éléments en forme de U (1361, 136r), respectivement, s'étendant à partir d'un tube oblique (132) dudit châssis principal sur des côtés se faisant face de celui-ci.

7. Agencement de couvercle conformément à l'une des revendications 5 ou 6, **caractérisé en ce que** lesdits éléments de couvercle de réservoir de carburant gauche et droit (21, 31) comprennent des parties centrales (21 cp, 31 cp) conçues pour être fixées au réservoir de carburant (103) de ladite motocyclette (100) à l'aide de moyens de fixation (21f, 31f), respectivement.

8. Agencement de couvercle conformément à la revendication 7, **caractérisé en ce que** lesdits éléments de couvercle de réservoir de carburant gauche et droit (21, 31) comprennent des parties inférieures (21lp, 31lp), respectivement, en regard desdites parties centrales (21 cp, 31 cp) et orientées vers le bas.

9. Agencement de couvercle conformément à la revendication 8, **caractérisé en ce que** lesdites parties inférieures (21lp, 31lp), conjointement avec lesdites parties centrales (21 cp, 31cp), respectivement, définissent lesdits sièges de réception (21 rs, 31 rs) conçus pour recevoir au moins partiellement lesdites parties antérieures (22fp, 32fp) desdits éléments de couvercle de côtés gauche et droit (22, 32), respectivement.

10. Agencement de couvercle conformément à la revendication 9, **caractérisé en ce que** lesdits sièges de réception (21 rs, 31 rs) sont limités par des bords inférieurs et supérieurs (21l, 21m) et (31 m, 31l) desdites parties centrales et inférieures (21 cp, 21lp) et (31 cp, 31lp), respectivement, et **en ce que** lesdits bords inférieurs (21l, 31l) viennent en prise avec lesdites parties antérieures (22fp, 32fp) desdits éléments de couvercle de côtés gauche et droit (22, 32), respectivement, une fois que lesdits éléments de couvercle de réservoir de carburant gauche et droit (21, 31) et que lesdits éléments de couvercle de côtés gauche et droit (22, 32) sont montés sur ladite motocyclette (100).

11. Agencement de couvercle conformément à la revendication 10, **caractérisé en ce que** lesdites parties antérieures (22fp, 32fp) desdits éléments de couvercle de côtés gauche et droit (22, 32) comprennent en outre de secondes parties en forme de pointe (22f1, 32f1), respectivement, et **en ce que** lesdits bords inférieurs (211, 311) sont reçus entre lesdites parties en pointe (22f2, 22f1) et (32f2, 32f1), respectivement.

12. Motocyclette (100) comprenant un réservoir de carburant (103) et un châssis principal supportant ledit réservoir de carburant (103), **caractérisée en ce que** ladite motocyclette comprend un agencement de couvercle conformément à l'une des revendications 1 à 11, et **en ce que** lesdits éléments de couvercle de côtés gauche et droit (22, 32) s'étendent dans le sens de la longueur de ladite motocyclette de part et d'autre du châssis principal de ladite motocyclette, et comprend des parties antérieures (22fp, 32fp), respectivement, comprenant des parties en forme de pointe (22f2, 32f2) orientées à l'opposé de ladite motocyclette (100) et **en ce que** lesdits éléments de couvercle de réservoir de carburant gauche et droit (21, 31) sont sensiblement en forme de C de façon à définir des sièges de réception (21 rs, 31 rs) recevant au moins partiellement lesdites parties antérieures (22fp, 32fp) desdits éléments de couvercle de côtés gauche et droit (22, 32), respectivement.

13. Motocyclette (100) conformément à la revendication 12, **caractérisé en ce que** ledit châssis principal comprend des tubes gauche et droit (131, 133) s'étendant sensiblement verticalement, et **en ce que** ladite motocyclette (100) comprend un agencement de couvercle conformément à la revendication 2, lesdits éléments de couvercle de côtés gauche et droit s'étendant de part et d'autre desdits tubes gauche et droit (131, 133) dudit châssis principal, respectivement.

14. Motocyclette (100) conformément à l'une des revendications 12 et 13, **caractérisé en ce qu'**elle comprend un agencement de couvercle conformément à la revendication 3, lesdits éléments de couvercle de côtés gauche et droit comprenant des parties arrière (22rp, 32rp), respectivement, orientées vers l'arrière de ladite motocyclette (100), des moyens de fixation (22f, 32f) étant situés dans lesdites parties arrière (22rp, 32rp), respectivement, si bien que lesdits éléments de couvercle de côtés gauche et droit (22, 32) sont fixés sur ladite motocyclette (100).

15. Motocyclette (100) conformément à la revendication 14, **caractérisée en ce qu'**elle comprend un agencement de couvercle conformément à la revendication 4, lesdits moyens de fixation (22f, 32f) fixant lesdites parties arrière (22rp, 32rp) desdits éléments de couvercle de côtés gauche et droit (22, 32), respectivement, sur des parties de ladite motocyclette autres que lesdits tubes gauche et droit (131, 133).

16. Motocyclette (100) conformément à l'une des revendications 12 à 15, **caractérisée en ce qu'**elle comprend un agencement de couvercle conformément à la revendication 5, lesdits éléments de couvercle de réservoir de carburant gauche et droit (21, 31) comprenant des parties antérieures (21fp, 31fp), respectivement, fixées sur le châssis principal de ladite motocyclette (100) à l'aide de moyens de fixation (21f, 31f), respectivement.

17. Motocyclette (100) conformément à la revendication 16, **caractérisée en ce qu'**elle comprend un agencement de couvercle conformément à la revendication 6, lesdites parties antérieures (21f, 31f) étant fixées sur des éléments en forme de U (136l, 136r), respectivement dudit châssis principal supportant le radiateur de ladite motocyclette (100).

18. Motocyclette (100) conformément à l'une des revendications 16 ou 17, **caractérisée en ce qu'**elle comprend un agencement de couvercle conformément à la revendication 7, lesdits éléments de couvercle de réservoir de carburant gauche et droit (21, 31) comprenant des parties centrales (21cp, 31 cp), respectivement, fixées sur le réservoir de carburant (103) de ladite motocyclette (100) à l'aide de moyens de fixation (21f, 31f), respectivement.

19. Motocyclette conformément à la revendication 18, **caractérisée en ce qu'**elle comprend un agencement de couvercle conformément à la revendication 8, lesdits éléments de couvercle de réservoir de carburant gauche et droit (21, 31) comprenant des parties inférieures (21lp, 31lp), respectivement, en regard desdites parties centrales (21 cp, 31 cp) et orientées vers le bas.

20. Motocyclette (100) conformément à la revendication 19, **caractérisée en ce qu'**elle comprend un agencement de couvercle conformément à la revendication 9, lesdites parties inférieures (21lp, 31 p), conjointement avec lesdites parties centrales (21 cp, 31 cp), respectivement, définissant lesdits sièges de réception (21 rs, 31 rs) recevant au moins partiellement lesdites parties antérieures (22fp, 32fp) desdits éléments de couvercle de côtés gauche et droit (22, 32), respectivement.

21. Motocyclette conformément à la revendication 20, **caractérisée en ce qu'**elle comprend un agencement de couvercle conformément à la revendication 10, lesdits sièges de réception (21 rs, 31 rs) étant limités par des sièges inférieurs et supérieurs (21l, 21m) et (31 m, 31l) desdites parties centrales et inférieures (21 cp, 21lp) et (31 cp, 31lp), respectivement, lesdits bords inférieurs (21l, 31l) entrant en prise avec lesdites parties antérieures (22fp, 32fp) desdits éléments de couvercle de côtés gauche et droit (22, 32), respectivement.

22. Motocyclette conformément à la revendication 21, **caractérisée en ce qu'**elle comprend un agencement de couvercle conformément à la revendication 11, lesdites parties antérieures (22fp, 32fp) desdits éléments de couvercle de côtés gauche et droit (22, 32) comprenant en outre de secondes parties en forme de pointe (22f1, 32f1), respectivement, lesdits bords inférieurs (21l, 31l) étant reçus entres lesdites parties en forme de pointe (22f2, 22f1) et (32f2, 32f1), respectivement.
